# FASCICULE DE BREVET EUROPEEN

(11) **EP 2 496 849 B1**
(45) Date de publication et mention de la délivrance du brevet: **13.01.2016**
(21) Numéro de dépôt: 10792962.2
(22) Date de dépôt: 03.11.2010
(51) Int. Cl.: F16B 39/22

(54) **DISPOSITIF DE FIXATION VISSANT AUTO-VERROUILLABLE ET ASSEMBLAGE AINSI EQUIPE**
SELBSTBLOCKIERENDE SCHRAUBFIXIERVORRICHTUNG UND ANORDNUNG DAMIT
SELF-LOCKING SCREWING ATTACHMENT DEVICE AND ASSEMBLY PROVIDED WITH SAME

(30) Priorité: 05.11.2009 FR 0957838
(43) Date de publication de la demande: 12.09.2012
(73) Titulaire: JPB Système, 77170 Brie-Comte-Robert (FR)
(72) Inventeur: MARC, Damien, F-77370 Nangis (FR)
(74) Mandataire: Pontet Allano & Associes
(86) Numéro de dépôt international: PCT/FR2010/052358
(87) Numéro de publication internationale: WO 2011/055077

(56) Documents cités:
- CH-A- 29 609
- US-A- 1 646 805

## Description

### Domaine de l'invention :

La présente invention concerne un dispositif de fixation vissant auto-verrouillable comprenant un écrou vissé sur un embout fileté.

La présente invention concerne également un assemblage d'au moins deux pièces fixées entre elles par un tel dispositif.

Le dispositif de fixation auto-verrouillage a pour fonction d'empêcher le dévissage intempestif des deux pièces l'une par rapport à l'autre, notamment dans les applications où les deux pièces sont soumises en service à des vibrations ou trépidations. Ceci s'applique à un assemblage de trois pièces ou davantage.

### Etat de l'art :

On connaît des dispositifs de fixation vissant destinés à solidariser au moins deux pièces entre elles, se présentant sous la forme générale d'un écrou vissé sur un embout fileté, pourvus de moyens d'accouplement renforcé libérables, destinés à empêcher le dévissage intempestif entre lesdites au moins deux pièces. Ces moyens d'accouplement renforcé réalisent un auto-verrouillage de l'accouplement lors du vissage de l'écrou sur l'embout. Un tel écrou est connue du document US 1 646 805 A.

Ces dispositifs connus présentent généralement des inconvénients de plusieurs natures :
- l'écrou est constitué de plusieurs parties séparables qui peuvent se perdre et doivent être assemblées selon un ordre précis,
- écrou non adapté à des pièces à assembler et/ou à des embouts filetés de forme multiples et non nécessairement standards ; les surfaces de frottement nécessaires au serrage sont très dépendantes de la forme des pièces à assembler, d'où une efficacité de serrage incertaine selon les configurations ; l'adaptation de ces écrous connus nécessite parfois un usinage conséquent et coûteux.
- dimensions peu optimisées.

### But de l'invention :

L'invention a pour but de pallier tout ou partie des inconvénients précédents en proposant un dispositif de fixation vissant auto-verrouillable destiné à fixer au moins deux pièces entre elles, qui soit compact, d'un seul tenant, adaptable à des configurations et formes de pièces multiples et non standards, où exigeant un minimum d'usinage.

### Objet(s) de l'invention :

A cet effet, l'invention a pour objet un dispositif de fixation vissant auto-verrouillable comprenant un écrou vissé sur un embout fileté s'étendant selon un axe de vissage, l'écrou comprenant :
- un premier élément rotatif par rapport à l'embout lors du vissage,
- un second élément en prise de rotation avec l'embout ou une pièce adjacente à assembler, traversée par l'embout,
- un organe d'arrêt solidaire en rotation du premier élément,
- des moyens d'accouplement libérables entre l'organe d'arrêt et le second élément,
l'écrou étant en outre pourvu d'une zone de serrage directe entre une première surface de serrage du premier élément et une seconde surface de serrage du second élément, lorsque le second élément coopère en appui axial avec l'embout ou ladite pièce adjacente à assembler.

Ainsi, l'effort de serrage est parfaitement maîtrisé puisqu'il est conditionné par des surfaces de serrage respectives de deux éléments constitutifs de l'écrou. De plus, seul un arrêt en rotation entre le second élément et une pièce adjacente ou l'embout fileté est à prévoir, ce qui engendre un usinage minime de ladite pièce adjacente ou de l'embout, tout en garantissant un verrouillage des plus sûrs, compte tenus des moyens d'accouplement libérables qui sont prévus.

Selon l'invention, le second élément est mobile dans la direction axiale X par rapport au premier élément, entre un arrêt axial porté par le premier élément et l'organe d'arrêt. L'organe d'arrêt peut être repoussé vers le second élément par des moyens de rappel prenant appui sur le premier élément, et étant entraîné en translation selon l'axe à l'encontre des moyens de rappel par rapport au premier élément, sous l'influence du second élément, à mesure que l'écrou est déplacé le long de l'axe lors du vissage, lorsque le second élément coopère en appui axial avec l'embout ou ladite pièce adjacente à assembler.

En raison de l'arrêt axial retenant le second élément sur le premier élément, l'écrou se présente sous la forme d'une fourniture unique, dispensant de réunir et d'assembler différents composant, ce qui le rend particulièrement simple à utiliser.

Selon l'invention, les moyens d'accouplement comprennent des dents dirigées axialement formées sur le second élément et sur l'organe d'arrêt, aptes à s'interpénétrer sous la sollicitation des moyens de rappel.

Selon encore d'autres caractéristiques avantageuses de l'invention, le premier élément comprend une zone de prise de rotation par un outil de vissage, délimitée axialement par une extrémité arrière de l'écrou par rapport à la direction axiale de vissage, et par un épaulement formé sur la périphérie de l'écrou.

Selon encore d'autres caractéristiques avantageuses de l'invention, l'écrou comprend un cylindre d'appui solidaire à son extrémité arrière d'une face avant de l'épaulement, une face de l'extrémité avant du cylindre constituant la première surface de serrage du premier élément.

Selon encore d'autres caractéristiques avantageuses de l'invention l'organe d'arrêt a une forme générale annulaire introduite dans une gorge de forme sensiblement cylindrique, délimitée d'une part intérieurement par une partie cylindrique prolongeant sensiblement la zone de prise de rotation au-delà de l'épaulement périphérique, dans la direction de vissage de l'écrou, et d'autre part extérieurement par le cylindre d'appui, l'organe d'arrêt comprenant en outre des moyens d'arrêt rotatif constitués d'au moins une protubérance radiale, par exemple ayant la forme générale d'une queue d'aronde coulissant axialement dans une rainure de forme conjuguée ménagée dans l'épaisseur du cylindre d'appui, une face avant de l'organe d'arrêt par rapport à la direction de vissage supportant une partie des dents des moyens d'accouplement.

Selon encore d'autres caractéristiques avantageuses de l'invention, le second élément a une forme générale annulaire dont une face arrière par rapport à la direction de vissage supporte une partie des dents des moyens d'accouplement, le second élément ayant un épaulement intérieur dont le profil radialement intérieur est intercalé entre l'arrêt axial et l'organe d'arrêt

Selon encore d'autres caractéristiques avantageuses de l'invention, le second élément comprend au moins un ergot s'étendant axialement dans la direction de vissage de l'écrou, l'ergot étant apte à s'introduire dans un logement de forme conjuguée ménagé dans la pièce adjacente à assembler, de manière à solidariser en rotation le second élément et ladite pièce adjacente.

Selon encore d'autres caractéristiques avantageuses de l'invention, les moyens de rappel sont de type ressort de compression, notamment ondulé.

Selon encore d'autres caractéristiques avantageuses de l'invention, l'écrou comprend un cylindre d'appui prolongeant la zone de prise de rotation au-delà de l'épaulement périphérique dans la direction axiale de vissage de l'écrou, dont une extrémité avant comporte une face constituant la première surface de serrage du premier élément.

Selon encore d'autres caractéristiques avantageuses de l'invention, l'organe d'arrêt a une forme générale annulaire introduite dans une gorge de forme sensiblement cylindrique, délimitée d'une part intérieurement par le cylindre d'appui, et d'autre part extérieurement par une enveloppe de forme générale cylindrique solidarisée avec l'épaulement périphérique et s'étendant dans la direction de vissage jusqu'à une extrémité avant, l'organe d'arrêt comprenant en outre des moyens d'arrêt rotatif constitués d'au moins une protubérance radiale, par exemple ayant la forme générale d'une queue d'aronde coulissant axialement dans une rainure de forme conjuguée ménagée dans l'épaisseur de l'enveloppe, une face avant de l'organe d'arrêt par rapport à la direction de vissage supportant une partie des dents des moyens d'accouplement.

Selon encore d'autres caractéristiques avantageuses de l'invention, le second élément a une forme générale annulaire dont une face arrière par rapport à la direction de vissage supporte une partie des dents des moyens d'accouplement, le second élément ayant un épaulement extérieur dont le profil radialement extérieur est intercalé entre l'arrêt axial et l'organe d'arrêt.

Selon encore d'autres caractéristiques avantageuses de l'invention, le second élément comprend au moins une protubérance radialement intérieure pénétrant dans une rainure ménagée sur l'embout, de manière à établir une liaison glissière de type clavette et à ainsi solidariser en rotation le second élément et l'embout.

Selon encore d'autres caractéristiques avantageuses de l'invention, les moyens de rappel sont de type ressort de compression, notamment hélicoïdal.

Selon encore d'autres caractéristiques avantageuses de l'invention, l'arrêt axial est formé d'un épaulement, notamment réalisé par sertissage, s'étendant radialement vers l'intérieur de l'écrou de manière à emprisonner le second élément dans la gorge.

L'invention a encore pour objet un assemblage entre un support sur lequel est monté solidairement un embout fileté et une pièce adjacente traversée par l'embout, comprenant un dispositif de fixation vissant auto-verrouillable ayant tout ou partie des caractéristiques précédentes.

L'invention a encore pour objet un assemblage sur un embout fileté d'une pièce adjacente telle qu'une poulie ou une roue, montée solidairement rotative sur l'embout, notamment via un système de clavette, la pièce adjacente étant emmanchée sur l'embout jusqu'à coopérer en appui sur un épaulement de l'embout, comprenant un dispositif de fixation vissant auto-verrouillable ayant tout ou partie des caractéristiques précédentes.

### Description détaillée :

L'invention sera mieux comprise à la lecture de la description qui va suivre de deux modes de réalisation non limitatifs de l'invention et à la lumière des dessins annexés sur lesquels :
- les figures 1 et 2 représentent un assemblage de deux pièces pourvu d'un dispositif d'accouplement vissant selon un premier mode de réalisation de l'invention, respectivement en configuration pré-assemblée et en configuration assemblée,
- la figure 3 représente une vue agrandie de l'écrou de la figure 1 avec une coupe partielle selon un plan de coupe longitudinal,
- la figure 4 représente une vue en perspective de l'écrou de la figure 1 avec arrachement d'un quart dans la direction longitudinale,
- la figure 5 représente une vue éclatée de l'écrou de la figure 1,
- la figure 6 représente une vue du ressort intégré à l'écrou de la figure 1,
- la figure 7 représente un assemblage d'une pièce sur un embout fileté pourvu d'un dispositif d'accouplement selon un second mode de réalisation de l'invention,
- la figure 8 représente une vue en perspective d'un de l'assemblage de la figure 7, avec arrachement d'un quart dans la direction longitudinale,

D'une façon générale dans la description qui suit, on évoque le vissage de l'écrou selon une direction axiale X, qui coïncide avec l'axe longitudinal de l'embout fileté coopérant avec l'écrou. Les notions « avant et « arrière » utilisées dans le texte pour décrire structurellement l'invention doivent être comprises en relation avec cette direction axiale, et plus précisément avec le sens de déplacement de l'écrou lors de son vissage sur l'embout (vissage vers l'avant, dévissage vers l'arrière).

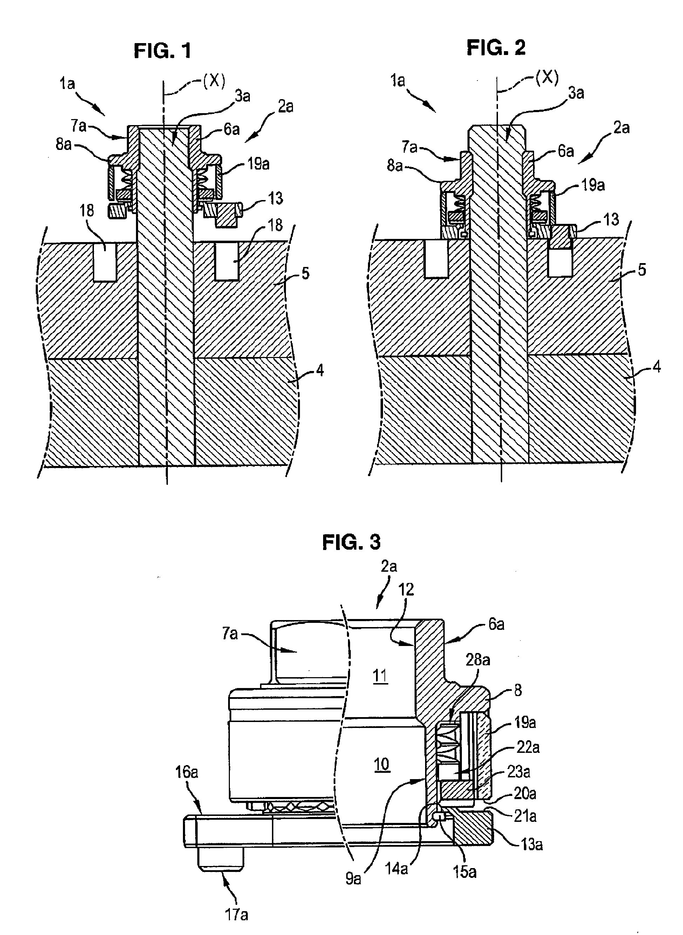

On a représenté aux figures 1 et 2 un dispositif de fixation vissant 1a auto-verrouillable selon un premier mode de réalisation de l'invention. Ce dispositif comprend un écrou 2a vissé sur un embout fileté 3a (ou goujon) de manière à assurer la fixation entre elles d'au moins deux pièces, typiquement une pièce support 4 et une pièce adjacente 5, dans l'exemple représenté. Dans cet exemple, l'embout fileté 3a est rigidement monté dans un alésage de la pièce support 4. La pièce adjacente 5 est traversée par l'embout 3a et prise en sandwich entre la pièce support 4 et l'écrou 2a. Dans une variante non représentée, l'embout 3a peut être pourvu d'un épaulement en appui contre une face de la pièce support 4 du côté opposé au filetage de l'embout 3a, de manière à prendre simultanément la pièce support 4 et la pièce adjacente 5 en sandwich entre l'épaulement et l'écrou 2a.

Selon l'invention, l'écrou 2a comprend un premier élément 6a rotatif par rapport à l'embout 3a lors du vissage. En référence aux figures 1 à 3, ce premier élément comprend plusieurs tronçons décomposables de l'arrière vers l'avant en une zone de prise de rotation 7a par un outil de vissage tel qu'une clé, un épaulement 8a formé sur la périphérie de l'écrou 2a, et une partie cylindrique 9a, prolongeant sensiblement la zone de prise de rotation 7a vers l'avant au delà de l'épaulement 8a. La zone 7a a typiquement une forme extérieure prismatique, par exemple à six-pans. Le premier élément comporte un alésage 10 traversant de part en part, dont une partie 11 plus étroite à l'arrière comporte un filetage 12 coopérant avec celui de l'embout 3a lors du vissage.

L'écrou 2a comprend un second élément 13a ayant une forme générale annulaire située à une extrémité avant de l'écrou 2a. Le second élément 13a comporte un épaulement intérieur 14a dont le profil radialement intérieur est enfilé autour d'une extrémité avant de la partie cylindrique 9a du premier élément 6a et est retenu vers l'avant par un arrêt axial 15a, typiquement un anneau élastique.

Dès lors que l'ergot 17a est introduit dans le logement 18, le second élément 13a est en prise de rotation avec la pièce adjacente 5, c'est-à-dire immobilisé en rotation avec cette dernière. On suppose dans ce cas que la pièce 5 est elle-même immobilisée en rotation par rapport à l'embout 3a. Le second élément 13a comprend une extension radiale 16 portant un ergot 17a s'étendant axialement dans la direction de vissage de l'écrou 2a, c'est-à-dire vers l'avant. L'ergot 17a est destiné à s'introduire dans un logement 18 de forme conjuguée, par exemple un alésage borgne ménagé dans la pièce adjacente 5. Dans l'exemple illustré aux figures 1 et 2, on prévoit deux logements 18 disposés à 180° autour de l'axe X, permettant d'éviter que le second élément 13a fasse un tour complet autour de l'axe X avant de disposer l'ergot 17a en regard du logement 18. En variante, un unique logement peut être suffisant.

Comme visible à la figure 3, l'écrou 2a comprend également un cylindre d'appui 19a solidaire à son extrémité arrière d'une face avant de l'épaulement 8a, une face de l'extrémité avant du cylindre 19a constituant une première surface de serrage 20a destinée à coopérer en appui avec une seconde surface de serrage 21a disposée en vis-à-vis de celle-ci sur une face arrière du second élément 13a. Le cylindre d'appui 19a forme une entretoise limitant la progression du premier élément 6a par rapport au second élément 13a lors du vissage de l'écrou 2a sur l'embout 3a. Le cylindre 19a est par exemple soudé à l'épaulement 8a. Une gorge 22a sensiblement annulaire ou cylindrique ménagée entre la partie cylindrique 9a et le cylindre d'appui 19a qui délimitent cette gorge respectivement intérieurement et extérieurement.

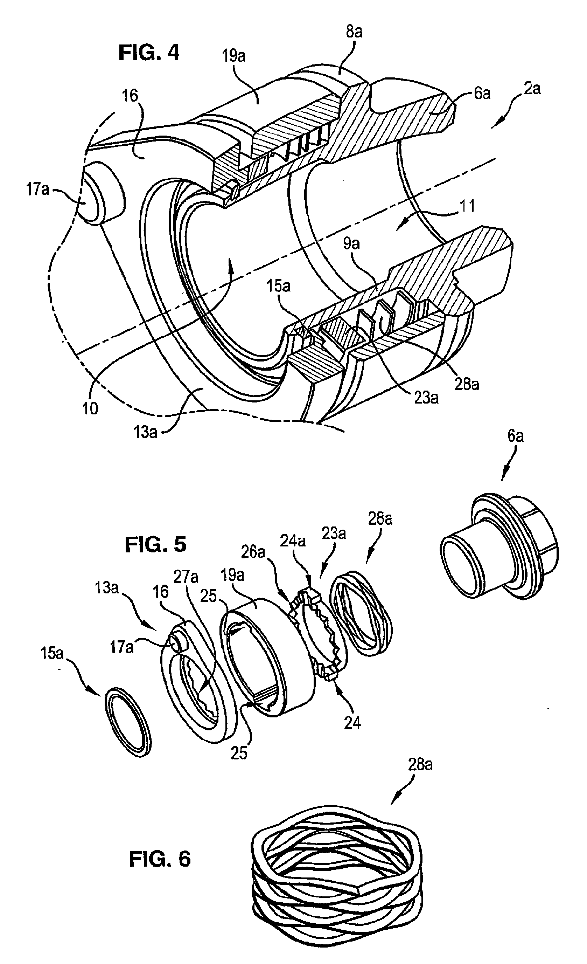

L'écrou 2a comprend également un organe d'arrêt 23a ayant une forme générale annulaire introduite dans la gorge 20a. L'organe d'arrêt 23a est solidaire en rotation du premier élément 6a. A cet effet, l'organe d'arrêt 23a comprend au moins une protubérance radiale 24a, typiquement deux protubérances 24a comme représenté sur les figures 1 à 5. Ces protubérances 24a sont introduites et coulissent axialement dans des rainures 25 de formes conjuguées ménagées dans l'épaisseur du cylindre d'appui 19a (figures 5). Ces protubérances ont par exemple des formes en queue d'aronde, dont la zone évasée est la plus éloignée de l'axe X, ces protubérances étant introduites dans des rainures respectives à section également trapézoïdale. Une telle forme trapézoïdale assure un guidage optimal de l'organe d'arrêt lors de son déplacement axial dans la gorge 22a.

Selon l'invention, l'écrou 2a comprend également des moyens d'accouplement libérables 26a, 27a, 28a constitués de deux groupes de dents dirigées axialement, solidaires pour un premier groupe de l'organe d'arrêt 23a, et pour le second groupe second élément 13a. Un groupe de dents 26a est prévu sur une face annulaire avant de l'organe d'arrêt 23a et un autre groupe de dents 27a est prévu sur une face annulaire arrière du second élément 13a en vis-à-vis de ladite face avant. Les dents sont de configuration triangulaire et ont plus précisément une forme isocèle, c'est-à-dire ont des faces tournées vers l'autre groupe de dents sont de même pente oblique. Les dents 26a de l'organe d'arrêt 23a et les dents 27a du second élément 13a ont des profils complémentaires de sorte qu'elles peuvent s'interpénétrer sous la sollicitation de moyens de rappel 28a disposés dans la gorge 22a, repoussant l'organe d'arrêt 23a vers le second élément 13a.

Le premier groupe de dent 26a de l'organe d'arrêt 23a est entraîné en rotation avec le premier élément 6a lors du vissage de l'écrou 2a, tandis que le second groupe de dents 27a du second élément 13a est immobilisé en rotation. Au cours de cette rotation relative entre les deux groupes de dents, ces dernières se trouvent alternativement dans une configuration d'interpénétration et une configuration pointe contre pointe, le passage entre ces deux dernières étant réalisé par glissement relatif des faces adjacentes respectives des deux groupes de dents. L'organe d'arrêt 23a effectue de ce fait des translations suivant l'axe X alternativement vers l'arrière et vers l'avant au cours du vissage de l'écrou 2a, ce qui s'apparente à un mouvement d'oscillation. Chaque translation est réalisée sur une course correspondant à la hauteur des dents, distance séparant la pointe d'une dent du creux entre deux dents, projetée sur la direction axiale.

Les moyens de rappel 28a sont typiquement formés d'un ressort de compression ondulé, comme illustré à la figure 6 travaillant sur une course axiale relativement faible, induite par les translations alternatives de l'organe d'arrêt 23a. Le ressort 28a prend appui d'une part sur un épaulement du premier élément 6a situé au fond de la gorge 22a, et d'autre part sur une face arrière de l'organe d'arrêt 23a.

Le vissage de l'écrou 2a sur l'embout 3a s'effectue de la façon suivante : comme illustré à la figure 1, l'écrou est présenté à l'extrémité de l'embout fileté puis vissé sur ce dernier à l'aide d'une clé adaptée en prise de rotation avec l'écrou. Au début du vissage, le second élément est libre en rotation, puis s'approche de la pièce adjacente 5. Lors du vissage de l'écrou 2a, le second élément 13a tourne autour de l'axe X jusqu'à ce que l'ergot entre en contact avec la pièce adjacente 5. Un vissage supplémentaire de l'écrou fait encore tourner le second élément 13a, jusqu'à ce que l'ergot 17a s'accroche au premier des logements 18 situé sur sa trajectoire, compte tenu de la poussé axiale vers l'avant. Cette indexation de l'ergot sur l'embouchure du logement s'opère de manière automatique et engendre un effet sensitif perçu par l'opérateur lors du vissage. L'ergot 17a ainsi disposé va pénétrer ensuite dans le logement 18 à mesure que le vissage se poursuit et que l'écrou progresse vers la pièce adjacente 5. Le second élément 13a est alors immobilisé en rotation par rapport au reste de l'écrou 2a. Toute rotation supplémentaire du premier élément 6a entraîne deux effets : d'une part le premier élément 6a va progresser en translation suivant l'axe X vers le second élément 13a, tant que rien ne s'oppose à cette progression. D'autre part, les moyens d'accouplement sont sollicités par le glissage relative entre les deux groupes de dents 26a, 27a, qui tournent l'un par rapport à l'autre en même temps que s'exerce une oscillation de l'organe d'arrêt 23a à l'encontre de l'effort de poussé exercé par les moyens de rappel 28a. On réalise alternativement des poussées et des relâchements dans le contact entre les deux groupes de dents, ce qui génère un effet de freinage également dit auto-verrouillable, empêchant le dévissage intempestif de l'écrou 2a, puisque le même phénomène de poussée et de relâchement entre les dents se présente lors du déverrouillage. Il faut pour lutter contre l'effort de poussée du ressort appliquer un couple de rotation sur le premier élément 6a supérieur à un seuil donné, de manière à générer soit le verrouillage, soit le déverrouillage.

Le vissage est poursuivi jusqu'à ce que le second élément 13a vienne se plaquer contre la pièce adjacente 5 et que le cylindre d'appui 19a vienne au contact du second élément 13a, par leur surface de serrage 20a, 21a respective, comme cela est représenté à la figure 2. Un couple de serrage est finalement appliqué sur le premier élément 6a, qui se traduit par un serrage approprié s'exerçant directement entre le cylindre d'appui 19a et le second élément 13a.

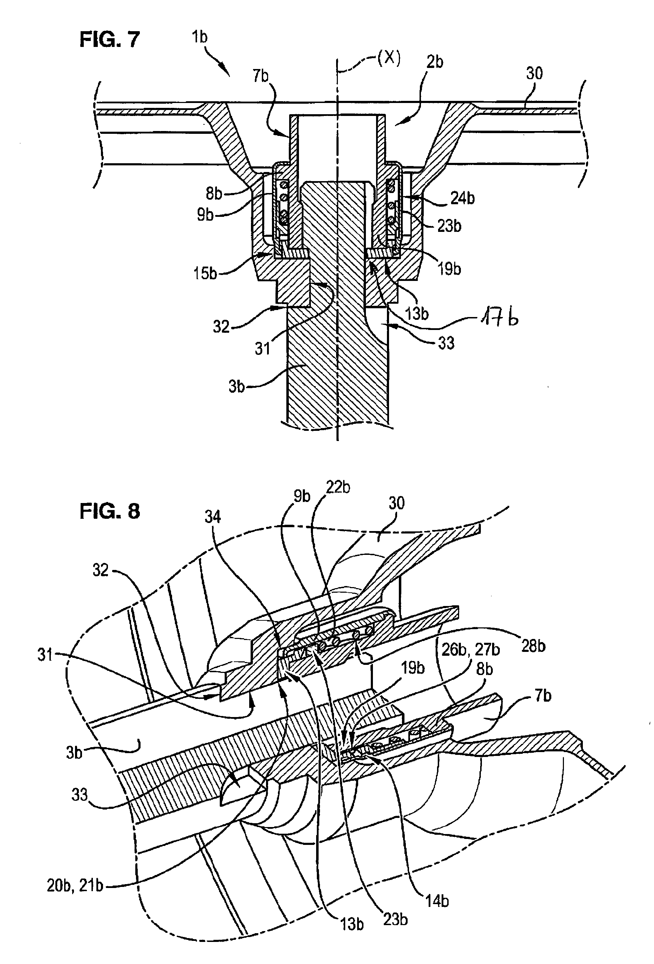

Un second mode de réalisation de l'invention est présenté aux figures 7 et 8 uniquement en ce qu'il se distingue du premier mode de réalisation. Les éléments portant des références ayant le même numéro de base (par ex. 2a et 2b) ont des fonctions ou effets techniques identiques dans les deux modes de réalisation.

Dans ce second mode de réalisation, l'assemblage est réalisé entre un élément tournant 30 tel qu'une poulie, une roue etc. et un embout 3b. L'élément tournant 30 comprend un moyeu pourvu d'un alésage central 31 permettant de l'emmancher sur l'extrémité de embout, jusqu'à venir en appui sur un épaulement 32 de l'embout 3b. Un dispositif anti-rotation est prévu entre l'élément tournant 30 et l'embout 3b, par exemple une extension radiale intérieure dans l'alésage de l'élément tournant, formant clavette, introduite dans une rainure 33 longitudinale formée sur l'extrémité de l'embout 3b.

Un premier élément de l'écrou 2b comprend plusieurs tronçons qui peuvent se décomposer de l'arrière vers l'avant en une zone de prise de rotation 7b à l'aide d'un outil adapté, un épaulement périphérique 8b, et un cylindre d'appui 19b.

Le cylindre d'appui 19b prolonge la zone de prise de rotation 7b au-delà de l'épaulement périphérique 8b vers l'avant, c'est-à-dire dans la direction de vissage de l'écrou 2b.

L'écrou comprend également une enveloppe 9b de forme générale cylindrique solidarisée avec l'épaulement périphérique 8b, et s'étendant vers l'avant jusqu'à une extrémité avant 34. Une gorge 22b de forme sensiblement cylindrique est délimitée d'une part intérieurement par le cylindre d'appui 19b, et extérieurement par l'enveloppe 9b.

L'écrou comprend un organe d'arrêt 23b ayant une forme générale annulaire, introduite dans la gorge 22b. L'organe d'arrêt 23b comprend des moyens d'arrêt rotatif constitués d'au moins une protubérance radiale 24b coulissant axialement dans une rainure de forme conjuguée ménagée dans l'épaisseur de l'enveloppe 9b. Cette protubérance peut par exemple avoir une forme générale en queue d'aronde ayant une partie évasée distante de l'axe X, assurant un guidage optimal de l'organe d'arrêt 23b par rapport à l'enveloppe 9b.

Dans ce mode de réalisation, le second élément 13b a une forme générale annulaire ayant un épaulement extérieur dont le profil radialement extérieur 14b est intercalé entre un arrêt axial 15b et l'organe d'arrêt 23b. L'arrêt axial 15b est constitué d'un épaulement ou resserrement, notamment réalisé par sertissage, s'étendant radialement vers l'axe X, de manière à emprisonner le second élément 13b dans la gorge 22b.

Comme dans le premier mode de réalisation, le second élément 23b comporte des moyens d'arrêt en rotation par rapport au premier élément 6a, constitués d'au moins une extension radialement intérieure pénétrant dans une rainure longitudinale ménagée sur l'embout 3b, de manière à établir une liaison de type clavette. La rainure peut avantageusement être la rainure 33 bloquant en rotation l'élément tournant 30.

Des moyens d'accouplement 26b, 27b, 28b sont constitués d'un premier groupe de dents 26b prévues sur une face annulaire avant de l'organe d'arrêt 23b, et d'un second groupe de dents 27b prévues sur une face annulaire arrière du second élément 13b.

Un ressort de compression 28b tel qu'un ressort hélicoïdal est disposé dans la gorge 22b, et prend appui sur un fond de la gorge 22b pour repousser l'organe d'arrêt 23b vers le second élément 13b, de manière à engendrer l'interpénétration des dents. Dans une variante non représentée, un ressort ondulé est également approprié.

Comme dans le premier mode de réalisation, des surfaces de serrage direct sont prévues entre deux éléments constitutifs de l'écrou 2b, à savoir une face annulaire avant du cylindre d'appui 19b, et une face annulaire arrière du second élément 13b. Le cylindre d'appui 19b forme une entretoise comme dans le premier mode de réalisation, en limitant la progression du premier élément 6b vers le second élément 13b, et permet une transmission directe de l'effort de serrage entre le premier élément et le second élément immobilisé en rotation.

Le principe de fonctionnement de ce second mode de réalisation est similaire au premier mode et ne sera pas décrit plus en détail.

D'une façon schématique, le premier et le second mode se différencient notamment de la façon suivante :
- cylindre d'appui situé à l'extérieur des moyens d'accouplement dans le premier mode de réalisation, tandis qu'ils sont situés à l'intérieur des moyens d'accouplement dans le second mode de réalisation.
- arrêt rotatif du second élément réalisé via la pièce adjacente dans le premier mode de réalisation alors qu'il est directement réalisé sur l'embout fileté dans le second mode de réalisation.
- arrêt axial du second élément réalisé par une partie cylindrique et un anneau élastique dans le premier mode de réalisation alors qu'il est réalisé par une partie resserrée de l'enveloppe dans le second mode de réalisation.

Bien entendu, l'invention n'est pas limitée aux moyens qui viennent d'être décrits et comprend tous les équivalents techniques.

## Revendications

1. Dispositif de fixation vissant (1a, 1b) auto-verrouillable comprenant un écrou (2a, 2b) vissé sur un embout fileté (3a, 3b) s'étendant selon un axe (X) de vissage, **caractérisé en ce que** l'écrou (2a, 2b) comprend :
- un premier élément (6a, 6b) rotatif par rapport à l'embout (3a, 3b) lors du vissage,
- un second élément (13a, 13b) en prise de rotation avec l'embout (3b) ou une pièce adjacente (5) à assembler, traversée par l'embout (3a),
- un organe d'arrêt (23a, 23b) solidaire en rotation du premier élément (6a, 6b),
- des moyens d'accouplement libérable (26a, 26b, 27a, 27b, 28a, 28b) entre l'organe d'arrêt (23a, 23b) et le second élément (13a, 13b), ces moyens d'accouplement étant constitués de deux groupes de dents dirigées axialement, solidaires pour un premier groupe de l'organe d'arrêt (23a, 23b), et pour le second groupe du second élément (13a, 13b),
l'écrou étant en outre pourvu d'une zone de serrage direct entre une première surface de serrage (20a, 20b) du premier élément (6a, 6b) et une seconde surface de serrage (21a, 21b) du second élément (13a, 13b), lorsque le second élément (13a, 13b) coopère en appui axial avec l'embout (3a, 3b) ou ladite pièce adjacente (5) à assembler, le second élément (13a, 13b) étant mobile dans la direction axiale (X) par rapport au premier élément (6a, 6b), entre un arrêt axial (15a, 15b) porté par le premier élément et l'organe d'arrêt (23a, 23b).

2. Dispositif selon la revendication 1, **caractérisé en ce que** l'organe d'arrêt (23a, 23b), est repoussé vers le second élément (13a, 13b) par des moyens de rappel (28a, 28b) prenant appui sur le premier élément (6a, 6b), et étant entraîné en translation selon l'axe (X) à l'encontre des moyens de rappel (28a, 28b) par rapport au premier élément (6a, 6b), sous l'influence du second élément (13a, 13b), à mesure que l'écrou (2a, 2b) est déplacé le long de l'axe (X) lors du vissage, lorsque le second élément (13a, 13b) coopère en appui axial avec l'embout (3a, 3b) ou ladite pièce adjacente (5) à assembler.

3. Dispositif selon la revendication 2, **caractérisé en ce que** les dents (26a, 26b, 27a, 27b) du second élément (13a, 13b) et de l'organe d'arrêt (23a, 23b) sont aptes à s'interpénétrer sous la sollicitation des moyens de rappel (28a, 28b).

4. Dispositif selon l'une quelconque des revendications 1 à 3, **caractérisé en ce que** le premier élément (6a, 6b) comprend une zone de prise de rotation (7a, 7b) par un outil de vissage, délimitée axialement par une extrémité arrière de l'écrou (2a, 2b) par rapport à la direction axiale de vissage, et par un épaulement (8a, 8b) formé sur la périphérie de l'écrou.

5. Dispositif selon la revendication 4, **caractérisé en ce que** l'écrou (2a, 2b) comprend un cylindre d'appui (19a, 19b) solidaire à son extrémité arrière d'une face avant de l'épaulement (8a, 8b), une face de l'extrémité avant du cylindre (19a, 19b) constituant la première surface de serrage (20a, 20b) du premier élément (6a, 6b).

6. Dispositif selon la revendication 5, **caractérisé en ce que** l'organe d'arrêt (23a) a une forme générale annulaire introduite dans une gorge (22a) de forme sensiblement cylindrique, délimitée d'une part intérieurement par une partie cylindrique (9a) prolongeant sensiblement la zone de prise de rotation (7a) au-delà de l'épaulement périphérique (8a), dans la direction de vissage de l'écrou (1), et d'autre part extérieurement par le cylindre d'appui (19a), l'organe d'arrêt (23a) comprenant en outre des moyens d'arrêt rotatif (24a) constitués d'au moins une protubérance radiale, par exemple ayant la forme générale d'une queue d'aronde coulissant axialement dans une rainure de forme conjuguée ménagée dans l'épaisseur du cylindre d'appui (19a), une face avant de l'organe d'arrêt (23a) par rapport à la direction de vissage supportant une partie des dents (26a) des moyens d'accouplement.

7. Dispositif selon l'une quelconque des revendications 3 à 6, **caractérisé en ce que** le second élément (13a) a une forme générale annulaire dont une face arrière par rapport à la direction de vissage supporte une partie des dents (27a) des moyens d'accouplement, le second élément (13a) ayant un épaulement intérieur dont le profil radialement intérieur (14a) est intercalé entre l'arrêt axial (15a) et l'organe d'arrêt (23a).

8. Dispositif selon l'une quelconque des revendications 1 à 7, **caractérisé en ce que** le second élément (13a) comprend au moins un ergot (17a) s'étendant axialement dans la direction de vissage de l'écrou (1), l'ergot étant apte à s'introduire dans un logement (18) de forme conjuguée ménagé dans la pièce adjacente (5) à assembler, de manière à solidariser en rotation le second élément (13a) et ladite pièce adjacente (5).

9. Dispositif selon l'une quelconque des revendications 2 à 8, **caractérisé en ce que** les moyens de rappel (28a) sont de type ressort de compression, notamment ondulé.

10. Dispositif selon la revendication 4, **caractérisé en ce que** l'écrou (1) comprend un cylindre d'appui (19b) prolongeant la zone de prise de rotation (7b) au-delà de l'épaulement périphérique (8b) dans la direction axiale de vissage de l'écrou (1), dont une extrémité avant comporte une face constituant la première surface de serrage (20b) du premier élément (6b).

11. Dispositif selon la revendication 10, **caractérisé en ce que** l'organe d'arrêt (23b) a une forme générale annulaire introduite dans une gorge (22b) de forme sensiblement cylindrique, délimitée d'une part intérieurement par le cylindre d'appui (19b), et d'autre part extérieurement par une enveloppe (9b) de forme générale cylindrique solidarisée avec l'épaulement périphérique (8b) et s'étendant dans la direction de vissage jusqu'à une extrémité avant, l'organe d'arrêt (23b) comprenant en outre des moyens d'arrêt rotatif (24b) constitués d'au moins une protubérance radiale, par exemple ayant la forme générale d'une queue d'aronde coulissant axialement dans une rainure de forme conjuguée ménagée dans l'épaisseur de l'enveloppe (9b), une face avant de l'organe d'arrêt (23b) par rapport à la direction de vissage supportant une partie des dents (26b) des moyens d'accouplement.

12. Dispositif selon l'une quelconque des revendications 3, 4, 10 et 11, **caractérisé en ce que** le second élément (13b) a une forme générale annulaire dont une face arrière par rapport à la direction de vissage supporte une partie des dents (27b) des moyens d'accouplement, le second élément (13b) ayant un épaulement extérieur dont le profil radialement extérieur (14b) est intercalé entre l'arrêt axial (15b) et l'organe d'arrêt (23b).

13. Dispositif selon l'une quelconque des revendications 1 à 4 et 10 à 12, **caractérisé en ce que** le second élément (13b) comprend au moins une protubérance (17b) radialement intérieure pénétrant dans une rainure (33) ménagée sur l'embout (3b), de manière à établir une liaison glissière de type clavette et à ainsi solidariser en rotation le second élément (13b) et l'embout (3b).

14. Dispositif selon l'une quelconque des revendications 2 à 4 et 10 à 13, **caractérisé en ce que** les moyens de rappel (28b) sont de type ressort de compression, notamment hélicoïdal.

15. Dispositif selon l'une quelconque des revendications 12 à 14, **caractérisé en ce que** l'arrêt axial (15b) est formé d'un épaulement, ou un resserrement notamment réalisé par sertissage, s'étendant radialement vers l'intérieur de l'écrou (2b) de manière à emprisonner le second élément (13b) dans la gorge (22b).

16. Assemblage entre un support (4) sur lequel est monté solidairement un embout (3a) fileté et au moins une pièce adjacente (5) traversée par l'embout (3a), **caractérisé en ce qu'**il comprend un dispositif de fixation vissant (1a) auto-verrouillable selon l'une quelconque des revendications 1 à 9.

17. Assemblage sur un embout (3b) fileté d'une pièce adjacente (30) telle qu'une poulie ou une roue, montée solidairement rotative sur l'embout (3b), notamment via un système de clavette, la pièce adjacente (30) étant emmanchée sur l'embout (3b) jusqu'à coopérer en appui sur un épaulement (32) de l'embout, **caractérisé en ce qu'**il comprend un dispositif de fixation vissant (1b) auto-verrouillable selon l'une quelconque des revendications 1 à 4 et 10 à 15.

## Patentansprüche

1. Selbstblockierende Schraubfixiervorrichtung (1a, 1b) mit einer Mutter (2a, 2b), die auf einen Gewindestutzen (3a, 3b) aufgeschraubt ist, der sich in einer Schraubachse (X) erstreckt, **dadurch gekennzeichnet, dass** die Mutter (2a, 2b) aufweist:
- ein erstes Element (6a, 6b), das sich beim Aufschrauben gegenüber dem Stutzen (3a, 3b) dreht,
- ein zweites Element (13a, 13b), das mit dem Stutzen (3b) oder einem zu montierenden, angrenzenden Teil (5) in Dreheingriff steht, das von dem Stutzen (3a) durchsetzt wird,
- ein Arretierglied (23a, 23b), das mit dem ersten Element (6a, 6b) drehfest verbunden ist,
- lösbare Kopplungseinrichtungen (26a, 26b, 27a, 27b, 28a, 28b) zur lösbaren Kopplung zwischen dem Arretierglied (23a, 23b) und dem zweiten Element (13a, 13b), wobei diese Kopplungseinrichtungen aus zwei Gruppen von axial ausgerichteten Zähnen bestehen, wovon diejenigen einer ersten Gruppe fest mit dem Arretierglied (23a, 23b) verbunden sind und diejenigen der zweiten Gruppe fest mit dem zweiten Element (13a, 13b) verbunden sind,
wobei die Mutter ferner mit einem Bereich zum direkten Verspannen zwischen einer ersten Spannfläche (20a, 20b) des ersten Elements (6a, 6b) und einer zweiten Spannfläche (21 a, 21b) des zweiten Elements (13a, 13b) versehen ist, wenn das zweite Element (13a, 13b) in axialer Abstützung mit dem Stutzen (3a, 3b) oder dem zu montierenden, angrenzenden Teil (5) zusammenwirkt, wobei das zweite Element (13a, 13b) in der axialen Richtung (X) bezüglich des ersten Elements (6a, 6b) zwischen einer von dem ersten Element getragenen axialen Arretierung (15a, 15b) und dem Arretierglied (23a, 23b) beweglich ist.

2. Vorrichtung nach Anspruch 1, **dadurch gekennzeichnet, dass** das Arretierglied (23a, 23b) über Rückstelleinrichtungen (28a, 28b), die sich am ersten Element (6a, 6b) abstützen, zum zweiten Element (13a, 13b) zurückgeschoben wird und unter der Wirkung des zweiten Elements (13a, 13b) entgegen den Rückstelleinrichtungen (28a, 28b) translatorisch bezüglich des ersten Elements (6a, 6b) entlang der Achse (X) mitgenommen wird, je weiter die Mutter (2a, 2b) beim Verschrauben entlang der Achse (X) verlagert wird, wenn das zweite Element (13a, 13b) in axialer Abstützung mit dem Stutzen (3a, 3b) oder dem zu montierenden angrenzenden Teil (5) zusammenwirkt.

3. Vorrichtung nach Anspruch 2, **dadurch gekennzeichnet, dass** die Zähne (26a, 26b, 27a, 27b) des zweiten Elements (13a, 13b) und des Arretierglieds (23a, 23b) dazu geeignet sind, unter der Beaufschlagung durch die Rückstelleinrichtungen (28a, 28b) ineinanderzugreifen.

4. Vorrichtung nach einem der Ansprüche 1 bis 3, **dadurch gekennzeichnet, dass** das erste Element (6a, 6b) einen zum Dreheingriff durch ein Schraubwerkzeug bestimmten Bereich (7a, 7b) aufweist, der axial von einem bezüglich der axialen Aufschraubrichtung hinteren Ende der Mutter (2a, 2b) und von einer Schulter (8a, 8b) begrenzt wird, die am Umfang der Mutter ausgebildet ist.

5. Vorrichtung nach Anspruch 4, **dadurch gekennzeichnet, dass** die Mutter (2a, 2b) einen Abstützzylinder (19a, 19b) aufweist, der an seinem hinteren Ende fest mit einer Vorderseite der Schulter (8a, 8b) verbunden ist, wobei eine Seite des vorderen Endes des Zylinders (19a, 19b) die erste Spannfläche (20a, 20b) des ersten Elements (6a, 6b) bildet.

6. Vorrichtung nach Anspruch 5, **dadurch gekennzeichnet, dass** das Arretierglied (23a) eine Ringform aufweist, die in eine im Wesentlichen zylindrische Nut (22a) eingeschoben ist, die einerseits innen von einem zylindrischen Abschnitt (9a) begrenzt wird, der im Wesentlichen den Dreheingriffsbereich (7a) über die Umfangsschulter (8a) hinaus verlängert, und zwar in Aufschraubrichtung der Mutter (1), und andererseits außen von dem Abstützzylinder (19a) begrenzt wird, wobei das Arretierglied (23a) ferner Dreharretiereinrichtungen (24a) aufweist, die aus zumindest einem radialen Vorsprung bestehen, der beispielsweise in Schwalbenschwanzform vorliegt und axial in einer Rinne entsprechender Form gleitet, die in der Dicke des Abstützzylinders (19a) ausgeführt ist, wobei eine bezüglich der Aufschraubrichtung vordere Seite des Arretierglieds (23a) einen Teil der Zähne (26a) des Kopplungseinrichtungen trägt.

7. Vorrichtung nach einem der Ansprüche 3 bis 6, **dadurch gekennzeichnet, dass** das zweite Element (13a) eine Ringform aufweist, von der eine bezüglich der Aufschraubrichtung hintere Seite einen Teil der Zähne (27a) der Kopplungseinrichtungen trägt, wobei das zweite Element (13a) eine innere Schulter aufweist, deren radial innen liegendes Profil (14a) zwischen der axialen Arretierung (15a) und dem Arretierglied (23a) eingesetzt ist.

8. Vorrichtung nach einem der Ansprüche 1 bis 7, **dadurch gekennzeichnet, dass** das zweite Element (13a) zumindest eine Nase (17a) aufweist, die sich axial in Aufschraubrichtung der Mutter (1) erstreckt, wobei die Nase dazu geeignet ist, sich in eine Aufnahmeausnehmung (18) entsprechender Form einzufügen, die in dem zu montierenden, angrenzenden Teil (5) ausgeführt ist, so dass das zweite Element (13a) und das angrenzende Teil (5) drehfest verbunden werden.

9. Vorrichtung nach einem der Ansprüche 2 bis 8, **dadurch gekennzeichnet, dass** die Rückstelleinrichtungen (28a) als Druckfeder, insbesondere Wellenfeder, ausgeführt sind.

10. Vorrichtung nach Anspruch 4, **dadurch gekennzeichnet, dass** die Mutter einen Abstützzylinder (19b) aufweist, der den Dreheingriffsbereich (7b) in axialer Aufschraubrichtung der Mutter (1) über die Umfangsschulter (8b) hinaus verlängert, wobei ein vorderes Ende des Abstützzylinders eine Seite aufweist, welche die erste Spannfläche (20b) des ersten Elements (6b) bildet.

11. Vorrichtung nach Anspruch 10, **dadurch gekennzeichnet, dass** das Arretierglied (23b) eine Ringform aufweist, die in eine im Wesentlichen zylindrische Nut (22b) eingeführt ist, die einerseits innen von dem Abstützzylinder (19b) und andererseits außen von einem Mantel (9b) begrenzt wird, der eine im Algemeine zylindrische Form aufweist, fest mit der Umfangsschulter (8b) verbunden ist und sich in Aufschraubrichtung bis zu einem vorderen Ende erstreckt, wobei das Arretierglied (23b) ferner Dreharretiereinrichtungen (24b) aufweist, die aus zumindest einem radialen Vorsprung bestehen, der beispielsweise in Schwalbenschwanzform vorliegt und axial in einer Rinne entsprechender Form gleitet, die in der Dicke des Mantels (9b) ausgeführt ist, wobei eine bezüglich der Aufschraubrichtung vordere Seite des Arretierglieds (23b) einen Teil der Zähne (26b) der Kopplungseinrichtungen trägt.

12. Vorrichtung nach einem der Ansprüche 3, 4, 10 und 11, **dadurch gekennzeichnet, dass** das zweite Element (13b) eine Ringform aufweist, von der eine bezüglich der Aufschraubrichtung hintere Seite einen Teil der Zähne (27b) der Kopplungseinrichtungen trägt, wobei das zweite Element (13b) eine äußere Schulter aufweist, deren radial außen liegendes Profil (14b) zwischen der axialen Arretierung (15b) und dem Arretierglied (23b) eingesetzt ist.

13. Vorrichtung nach einem der Ansprüche 1 bis 4 und 10 bis 12, **dadurch gekennzeichnet, dass** das zweite Element (13b) zumindest einen radial inneren Vorsprung (17b) aufweist, der in eine Rinne (33) eingreift, die am Stutzen (3b) ausgeführt ist, so dass eine Gleitverbindung vom Typ Keilverbindung ausgebildet wird und dadurch das zweite Element (13b) und der Stutzen (3b) drehfest verbunden werden.

14. Vorrichtung nach einem der Ansprüche 2 bis 4 und 10 bis 13, **dadurch gekennzeichnet, dass** die Rückstelleinrichtungen (28b) als Druckfeder, insbesondere Schraubenfeder, ausgeführt sind.

15. Vorrichtung nach einem der Ansprüche 12 bis 14, **dadurch gekennzeichnet, dass** die axiale Arretierung (15b) aus einer Schulter oder einer insbesondere durch Krimpen hergestellten Einschnürung gebildet ist, die sich radial in das Innere der Mutter (2b) so erstreckt, dass das zweite Element (13b) in der Nut (22b) eingeschlossen wird.

16. Verbindung zwischen einem Träger (4), an dem ein Gewindestutzen (3a) fest montiert ist, und zumindest einem angrenzenden Teil (5), das von dem Stutzen (3a) durchsetzt wird, **dadurch gekennzeichnet, dass** sie eine selbstblockierende Schraubfixiervorrichtung (1a) nach einem der Ansprüche 1 bis 9 aufweist.

17. Anbindung eines angrenzenden Teils (30), wie etwa einer Riemenscheibe oder eines Rades, an einem Gewindestutzen (3b), welches Teil drehfest an dem Stutzen (3b) gelagert ist, insbesondere über ein Keilverbindungssystem, wobei das angrenzende Teil (30) auf den Stutzen (3b) so weit aufgesteckt ist, dass es in Abstützung an einer Schulter (32) des Stutzens mitwirkt, **dadurch gekennzeichnet, dass** sie eine selbstblockierende Schraubfixiervorrichtung (1b) nach einem der Ansprüche 1 bis 4 und 10 bis 15 aufweist.

## Claims

1. A self-locking screwing attachment device (1a, 1b) including a nut (2a, 2b) screwed onto a threaded tip (3a, 3b) extending along a screwing axis (X), **characterised in that** the nut (2a, 2b) includes:
- a first element (6a, 6b) rotating relative to the tip (3a, 3b) during screwing,
- a second element (13a, 13b) engaged for common rotation with the tip (3b) or an adjacent part (5) to be assembled, the tip (3a) passing therethrough,
- a stop member (23a, 23b) rotatably secured against rotation with respect to the first element (6a, 6b),
- a releasable coupling means (26a, 26b, 27a, 27b, 28a, 28b) between the stop member (23a, 23b) and the second element (13a, 13b), this coupling means consisting of two groups of axially directed teeth, secured for a first group to the stop member (23a, 23b), and for the second group to the second element (13a, 13b),
the nut being further provided with an area for direct clamping of a first clamping surface (20a, 20b) of the first element (6a, 6b) and a second clamping surface (21a, 21b) of the second element (13a, 13b) against each other, when the second element (13a, 13b) axially engages the tip (3a, 3b) or said adjacent part (5) to be assembled, the second element (13a, 13b) being movable in the axial direction (X) with respect to the first element (6a, 6b), between an axial stop (15a, 15b) carried by the first element and the stop member (23a, 23b).

2. The device according to claim 1, **characterised in that** the stop member (23a, 23b) is urged towards the second element (13a, 13b) by return means (28a, 28b) resting on the first element (6a, 6b), and being driven in translation along the axis (X) against the return means (28a, 28b) with respect to the first element (6a, 6b), under the influence of the second element (13a, 13b), as the nut (2a, 2b) is moved along the axis (X) during screwing, when the second element (13a, 13b) axially engages the tip (3a, 3b) or said adjacent part (5) to be assembled.

3. The device according to claim 2, **characterised in that** the teeth (26a, 26b, 27a, 27b) of the second element (13a, 13b) and the stop member (23a, 23b) are interpenetrable when biased by the return means (28a, 28b).

4. The device according to any of claims 1 to 3, **characterised in that** the first element (6a, 6b) includes an area (7a, 7b) for being engaged by a screwing tool for common rotation therewith, said area axially bounded by a back end of the nut (2a, 2b) with respect to the axial screwing direction, and by a shoulder (8a, 8b) formed on the periphery of the nut.

5. The device according to claim 4, **characterised in that** the nut (2a, 2b) includes a supporting cylinder (19a, 19b) secured at a back end thereof to a front face of the shoulder (8a, 8b), a face of the front end of the cylinder (19a, 19b) making up the first clamping surface (20a, 20b) of the first element (6a, 6b).

6. The device according to claim 5, **characterised in that** the stop member (23a) has generally an annular shape introduced into a throat (22a) having a substantially cylindrical shape, bounded on the one hand internally by a cylindrical part (9a) substantially extending the area for engagement for common rotation (7a) beyond the peripheral shoulder (8a), in the screwing direction of the nut (1), and on the other hand externally by the supporting cylinder (19a), the stop member (23a) further including rotation stopping means (24a) consisting of at least one radial protrusion, for example having generally a dovetail shape, axially sliding in a groove having a conjugated shape provided in the thickness of the supporting cylinder (19a), a front face of the stop member (23a) with respect to the screwing direction supporting part of the teeth (26a) of the coupling means.

7. The device according to any of claims 3 to 6, **characterised in that** the second element (13a) has generally an annular shape a back face of which with respect to the screwing direction supports part of the teeth (27a) of the coupling means, the second element (13a) having an inner shoulder the radially inner profile (14a) of which is sandwiched between the axial stop (15a) and the stop member (23a).

8. The device according to any of claims 1 to 7, **characterised in that** the second element (13a) includes at least one lug (17a) axially extending in the screwing direction of the nut (1), the lug being capable of introduction into a housing (18) having a conjugated shape provided in the adjacent part (5) to be assembled, so as to secure the second element (13a) against rotation with respect to said adjacent part (5).

9. The device according to any of claims 2 to 8, **characterised in that** the return means (28a) are of the compression spring type, in particular of the wavy type.

10. The device according to claim 4, **characterised in that** the nut (1) includes a supporting cylinder (19b) extending the area for engagement for common rotation (7b) beyond the peripheral shoulder (8b) in the axial screwing direction of the nut (1), wherein a front end of the supporting cylinder includes a face making up the first clamping surface (20b) of the first element (6b).

11. The device according to claim 10, **characterised in that** the stop member (23b) has generally an annular shape introduced into a throat (22b) having a substantially cylindrical shape, bounded on the one hand internally by the supporting cylinder (19b), and on the other hand externally by a cover (9b) having generally a cylindrical shape secured to the peripheral shoulder (8b) and extending in the screwing direction up to a front end, the stop member (23b) further including rotation stopping means (24b) consisting of at least one radial protrusion, for example having generally a dovetail shape, axially sliding in a groove having a conjugated shape provided in the thickness of the cover (9b), a front face of the stop member (23b) with respect to the screwing direction supporting part of the teeth (23b) of the coupling means.

12. The device according to any of claims 3, 4, 10 and 11, **characterised in that** the second element (13b) has generally an annular shape a back face of which with respect to the screwing direction supports part of the teeth (27b) of the coupling means, the second element (13b) having an outer shoulder the radially outer profile (14b) of which is sandwiched between the axial stop (15b) and the stop member (23b).

13. The device according to any of claims 1 to 4 and 10 to 12, **characterised in that** the second element (13b) includes at least one radially inner protrusion (17b) penetrating a groove (33) provided on the tip (3b), so as to set a key type slide link and thus secure the second element (13b) against rotation with respect to the tip (3b).

14. The device according to any of claims 2 to 4 and 10 to 13, **characterised in that** the return means (28b) are of the compression spring type, in particular a coiled spring.

15. The device according to any of claims 12 to 14, **characterised in that** the axial stop (15b) is formed by a shoulder, or a narrowed portion in particular made by crimping, extending radially towards inside the nut (2b) so as to trap the second element (13b) in the throat (22b).

16. An assembly between a support (4) onto which is securely mounted a threaded tip (3b) and at least one adjacent part (5) through which the tip (3b) passes, **characterised in that** it includes a self-locking screwing attachment device (1a) according to any of claims 1 to 9.

17. An assembly on a threaded tip (3b) of an adjacent part (30) such as a pulley or a wheel, mounted on the tip (3b) for common rotation therewith, in particular via a key system, the adjacent part (30) being fitted onto the tip (3b) to the point of axially engaging a shoulder (32) of the tip, **characterised in that** it includes a self-locking screwing attachment device (1b) according to any of claims 1 to 4 and 10 to 15.
